# EUROPÄISCHE PATENTSCHRIFT

(11) **EP 0 725 521 B1**
(45) Veröffentlichungstag und Bekanntmachung des Hinweises auf die Patenterteilung: **01.08.2001**
(21) Anmeldenummer: 96101507.0
(22) Anmeldetag: 02.02.1996
(51) Int. Cl.: H04L 12/43, H04B 1/20

(54) **Verfahren zur Übertragung von digitalen Daten**
Method for transmitting digital data
Procédé de transmission de données numériques

(30) Priorität: 02.02.1995 DE 19503212
(43) Veröffentlichungstag der Anmeldung: 07.08.1996
(73) Patentinhaber: BECKER GmbH, D-76307 Karlsbad (DE)
(72) Erfinder: Hetzel, Herbert, D-76356 Weingarten (DE); Heck, Patrick, D-76448 Durmersheim (DE); Stiegler, Andreas, D-76307 Karlsbad (DE)
(74) Vertreter: Patentanwälte Westphal, Mussgnug & Partner

(56) Entgegenhaltungen:
- GB-A- 2 276 796

## Beschreibung

Die Erfindung betrifft ein Verfahren zur Übertragung von digitalen Daten über Datenleitungen zwischen Datenquellen und -senken bildenden Teilnehmern, die in einem mehrere Teilnehmer miteinander verbindenden Netzwerk angeordnet sind, in welchem die Daten in einem Format übertragen werden, welches eine getaktete Folge von einzelnen in Teil-Bitgruppen unterteilten Bitgruppen gleicher Länge vorschreibt, welche jeweils temporär bestimmten Teilnehmern im Netzwerk für eine Datenübertragung in Form eines Datenkanals zuweisbar sind.

Dabei werden die Daten in ein zu einem Taktsignal synchronen kontinuierlichen Datenstrom übertragen. Dabei wird das Taktsignal von einem einzigen Teilnehmer generiert. Alle anderen Teilnehmer synchronisieren sich auf dieses Taktsignal. Davon zu unterscheiden sind rein asynchrone Datenübertragungsverfahren, wie paketorientierte Datenübertragungsverfahren z.B. ATM-Verfahren.

Verfahren dieser Art werden überall dort eingesetzt, wo mehrere elektrische oder elektronische Geräte, die untereinander Informationen austauschen sollen, mittels Datenleitungen miteinander vernetzt sind. So kann beispielsweise im Audiobereich die Kommunikation zwischen miteinander vernetzten Datenquellen einerseits, wie z.B. CD-Spielern, Radioempfängern und Kassettenrekordern und damit verbundenen Datensenken andererseits, wie beispielsweise Verstärker-Lautsprecher-Kombinationen, durch ein solches Verfahren gesteuert werden.

Aus GB-A2 276 796 ist ein derartiges Verfahren zur Datenübertragung bekannt.

Ein erster Nachteil dieses bekannten Verfahrens zur Datenübertragung liegt darin begründet, dass die Belegung der Kanäle von einer zentralen Steuereinheit gesteuert wird. Ein zweiter Nachteil ist darin zu sehen, dass keinerlei Vorsorge für den Fall getroffen wird, dass die Datenübertragung fehlerhaft ist oder überhaupt nicht zustande kommt. Schließlich ist als dritter Nachteil zu erwähnen, dass bei Belegung aller Datenkanäle durch einen Teilnehmer eine Kommunikation zwischen weiteren Teilnehmern nicht mehr möglich ist.

Der Erfindung liegt daher die Aufgabe zugrunde, ein Verfahren der eingangs genannten Art anzugeben, welches diese Nachteile nicht aufweist. Insbesondere soll eine leistungsfähige Datenübertragung zwischen vielen Teilnehmern in einem Netzwerk ohne großen Aufwand ermöglicht werden.

Die Erfindung löst diese Aufgabe mit den Merkmalen des Anspruchs 1 dadurch, dass von jedem Teilnehmer aus die Belegung der Teil-Bitgruppen und damit der oder die Datenkanäle in Datenflussrichtung frei wählbar ist und dass eine Zuordnung der Teil-Bitgruppen für die zur Datenübertragung verwendeten Datenkanäle von jedem Teilnehmer über eine Zuordnungsvorschrift erfolgt, die mittels eines Steuerbefehls im Rahmen der Datenübertragung festlegbar ist.

Durch die freie Zuweisbarkeit der Teil-Bitgruppen zu einem Datenkanal wird die Gesamtzahl der benötigten Datenkanäle und Leitungen verringert, da alle aus frei zuordnenbaren Teil-Bitgruppen gebildeten Kanäle grundsätzlich von allen Teilnehmern auch zeitgleich benutzt werden können, aber nicht stets alle Teilnehmer untereinander Daten austauschen. Sind beispielsweise in einem Netzwerk mit Ringstruktur mehrere Audiodatenquellen und mindestens eine Audiodatensenke vorhanden, die jeweils zur Übertragung von Stereo-Audio-Daten vier Teil-Bitgruppen benötigen, so kann die Übertragung dieser Audiodaten stets über dieselben vier Teil-Bitgruppen erfolgen, wobei diese Teil-Bitgruppen entweder jeweils einen eigenen Datenkanal bilden können oder gemeinsam einen einzigen oder mehrere Datenkanäle bilden können. Diese Zuordnung wird durch den Steuerbefehl in einer optimierten Form vorgenommen. Dies führt dazu, dass eingehende Teil-Bitgruppen, welche Bestandteil der in einem festen Format übertragenen Daten sind, in einem Teilnehmer von der ursprünglichen Position im Format auf eine andere Position einer anderen Teil-Bitgruppe umgruppiert werden können, ohne dass die durch den Datenkanal repräsentierte Verbindung zwischen dem sendenden Teilnehmer und dem empfangenden Teilnehmer betroffen ist.

Es müssen also bei dem erfindungsgemäßen Verfahren nur so viele Datenkanäle und Leitungen zur Verfügung gestellt werden, wie maximal gleichzeitig benötigt werden oder zugelassen werden sollen. Durch die Zuordnungsvorschrift ist dabei gewährleistet, dass die jeweiligen Daten zwischen Datenquelle und Datensenke richtig zugeordnet werden, dass also beispielsweise die Audiodaten eines CD-Spielers auf die entsprechenden Audioeingänge eines Verstärkers übertragen werden. Die Zuordnungsvorschrift wird dabei in Abhängigkeit von der herzustellenden Verbindung mittels eines zuvor übermittelten Steuerbefehls festgelegt.

Vorzugsweise werden mehrere Teil-Bitgruppen, auch nicht zusammenhängende, einem einzigen Datenkanal zugeordnet, wodurch die Flexibilität des Netzwerkes erhöht wird. Durch die Wahl, die Teil-Bitgruppen sowohl gleich lang als auch zusammenhängend auszubilden, lässt sich auf sehr einfache Weise das Umgruppieren der einzelnen Teil-Bitgruppen und das Neuzuordnen der Teil-Bitgruppen zu dem Datenkanal sicherstellen, da der Verwaltungsaufwand deutlich gesenkt wird.

Nach einer Ausgestaltung der Erfindung weist jeder Teilnehmer im Netzwerk eine Kontrolleinheit mit einer über einen Steuerbefehl festlegbaren Zuordnungsvorschrift auf, über welche jedem Datenkanal einzelne Teil-Bitgruppen zugeordnet werden können. Die Zuordnung der Daten wird also nicht über eine zentrale Verwaltungseinheit vorgenommen, sondern dezentral bei jedem Teilnehmer im Netzwerk. Hierdurch wird eine zusätzliche Verwaltungseinheit eingespart, die zudem einen Engpass darstellen würde, der eine Verringerung der Datenübertragungskapazität zur Folge hätte. Es ist also in jedem einzelnen Teilnehmer selbst festgelegt, welche Teil-Bitgruppen er einem der Datenkanäle des Netzwerks zuordnet, wobei diese Festlegung durch einen Steuerbefehl erfolgt, der beispielsweise von der Datenquelle erzeugt wird, welche die übertragenen Daten abschickt.

Die Zuordnungsvorschrift ist bevorzugt in einem Schreib-Lese-Speicher eines jeden Teilnehmers in Form einer Matrix gespeichert. Die Zuordnungsvorschrift ist damit durch einen Steuerbefehl jederzeit wieder aufhebbar oder änderbar. Sollen beispielsweise von einem CD-Spieler zunächst Audiodaten über die Teil-Bitgruppen 1 bis 4, die in diesem Beispiel einen Datenkanal bilden, im Netzwerk an einen Verstärker übertragen werden, so wird von dem CD-Spieler zunächst ein Steuerbefehl ausgegeben, der über die Kontrolleinheit des Verstärkers eine Zuordnung zwischen den Teil-Bitgruppen 1 bis 4 und den Audioeingängen des Verstärkers herstellt. Die anschließend vom CD-Spieler übertragenen Audiodaten werden dann gemäß dieser im Verstärker vorhandenen Zuordnungsvorschrift an die Audioeingänge des Verstärkers übertragen. Sollen dann beispielsweise nach beendeter Audioübertragung vom CD-Spieler zu einem späteren Zeitpunkt Audiodaten über die Kanäle 3 bis 6 an den Verstärker übertragen werden, weil die Teil-Bitgruppen 1 und 2 für eine Übertragung nicht zur Verfügung stehen, so wird über einen weiteren des Verstärkers entsprechend geändert, so dass nun die Teil-Bitgruppen 3 bis 6 mit den Audioeingängen des Verstärkers verbunden sind.

Jeder Teilnehmer kann neben dem Netzeingang und dem Netzausgang mehrere Dateneingänge und/oder -ausgänge aufweisen. In diesem Fall kann über die Zuordnungsvorschrift jeder Teil-Bitgruppe, welche einem Datenkanal zugeordnet ist, ein bestimmter Dateneingang des jeweiligen Teilnehmers zugeordnet werden. Jeder Datenausgang eines Teilnehmers kann einer bestimmten Teil-Bitgruppe, welche einem Datenkanal zugeordnet ist, zugeordnet werden.

Die die Zuordnungsvorschrift enthaltende Matrix kann nach einer Ausgestaltung der Erfindung auch dazu verwendet werden, einzelne Bits oder Teil-Bitgruppen der im Netzwerk übertragenen Bitgruppen einzelnen Bits oder Teil-Bitgruppen der Dateneingänge und/oder -ausgänge der Teilnehmer zuzuordnen, wenn diese zur Verarbeitung eines vorgegebenen, die Abfolge einzelner Bits oder einzelner Teil-Bitgruppen definierenden Datenformats geeignet sind.

Darüber hinaus kann die Zuordnungsvorschrift eines Teilnehmers auch dazu verwendet werden, die im Netzwerk übertragenen Daten bit- oder teilbitgruppenweise umzugruppieren. So können beispielsweise Daten die von einem Teilnehmer über Teil-Bitgruppen empfangen werden von dem jeweiligen Teilnehmer in anderen Teil-Bitgruppen weitergeschickt werden. Dies hat den Vorteil, daß die vorhandene Leitung und damit Datenkanäle optimal ausgenutzt werden können. Außerdem ist es dadurch möglich, Daten von verschiedenen Teil-Bitgruppen eines Teilnehmerausgangs oder sogar von verschiedenen Ausgängen zusammenzumischen und gemeinsam im Netz zu übertragen.

Selbstverständlich kann die Zuordnungsvorschrift in jedem Teilnehmer auch dazu verwendet werden, den Netzeingang des Teilnehmers mit dem Netzausgang des Teilnehmers zu verbinden, um die auf einer oder mehreren bestimmten Teil Bitgruppen übertragenen Daten durch diesen Teilnehmer nur hindurchzuschleußen, wenn dieser Teilnehmer für die betreffenden Daten weder Datenquelle noch Datensenke ist.

Ein Ausführungsbeispiel der Erfindung ist in der Zeichnung dargestellt und wird nachfolgend beschrieben. Es zeigen
- Fig. 1: ein Netzwerk mit Ringstruktur und vier Teilnehmern,
- Fig. 2: eine schematische Darstellung der Zuordnung zwischen den Ein- und Ausgängen eines Teilnehmers, und
- Fig. 3: eine schematische Darstellung der Zuordnungsvorschrift.

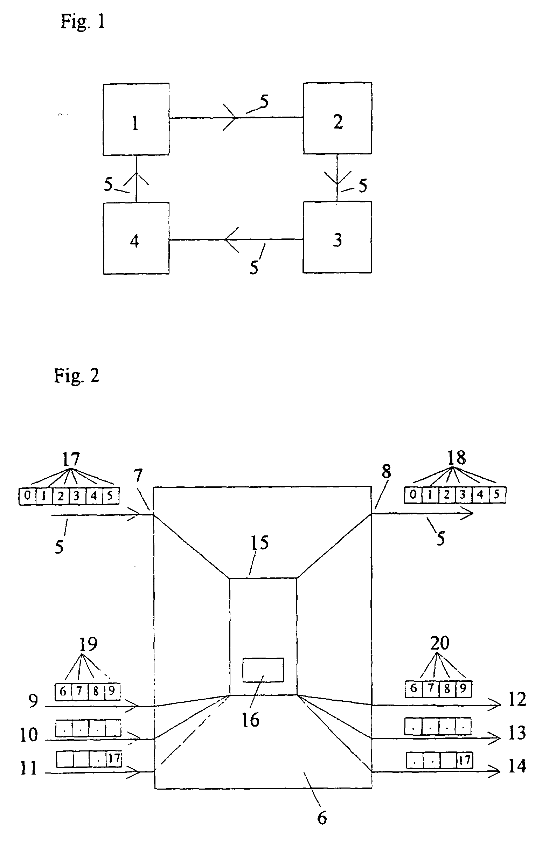

Das in Fig. 1 dargestellte Netzwerk umfaßt vier Teilnehmer 1, 2, 3 und 4, die jeweils sowohl eine Datenquelle als auch eine Datensenke darstellen können. Die vier Teilnehmer 1, 2, 3 und 4 sind über eine Ringdatenleitung 5 miteinander verbunden, die beispielsweise ein Lichtwellenleiter sein kann. Die Verbindung zwischen jedem Teilnehmer 1, 2, 3 und 4 und der Datenleitung 5 erfolgt jeweils über eine Schnittstelle 6, die für jeden Teilnehmer in der in Fig. 2 schematisch dargestellten Weise aufgebaut ist.

Eine solche Schnittstelle 6 umfaßt einen Netzdateneingang 7 und einen Netzdatenausgang 8 sowie jeweils drei Teilnehmerdateneingänge 9, 10, 11 und drei Teilnehmerdatenausgänge 12, 13 und 14. Darüber hinaus ist in der Schnittstelle 6 eine Steuereinheit 15 vorhanden, über welche die Verbindung der Eingänge 7, 9, 10 und 11 mit den Ausgängen 8, 12, 13 und 14 gesteuert wird.

Die Zuordnung der Eingänge und Ausgänge erfolgt nach einer Zuordnungsvorschrift, die in einem Schreib-Lese-Speicher 16 gespeichert ist. Die Zuordnungsvorschrift hat die Form einer 2xn-Matrix, wobei n durch die Zahl der zuzuordnenden Elemente bestimmt ist.

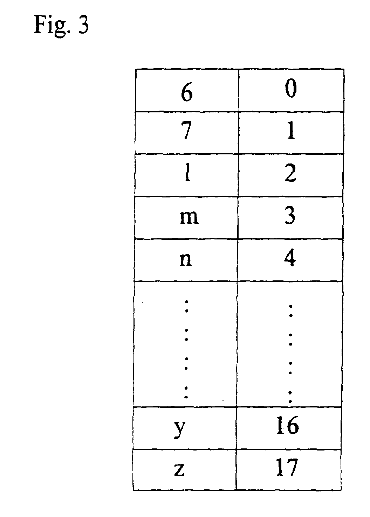

Bei der dargestellten Ausführungsform stehen für die Datenübertragung in dem durch die Ringleitung 5 gebildeten Netz sechs Teil-Bitgruppen zur Verfügung, die beispielsweise jeweils acht Bit umfassen können. Der Netzdateneingang 7 und der Netzdatenausgang 8 weisen daher jeweils sechs Teil-Bitgruppen 17 bzw. 18, nachfolgend als Byte bezeichnet auf. Die den Schnittstelleneingängen 9, 10, 11 und den Schnittstellenausgängen 12, 13, 14 zugeordneten Eingänge und Ausgänge der Teilnehmer 1 bis 4 im Netzwerk arbeiten mit einem Datenformat, welches vier Teil-Bitgruppen, insbesondere ebenfalls zu acht Bit und nachfolgend als Byte bezeichnet, vorgibt. Die Schnittstelleneingänge und -ausgänge 9, 10, 11 bzw. 12, 13, 14 sind daher in jeweils vier Bytes 19 bzw. 20 unterteilt. Soll eine Zuordnung aller Bytes 17, 19 der Schnittstelleneingänge 7, 9, 10 und 11 zu allen Bytes 18, 20 der Schnittstellenausgänge 8, 12, 13 und 14 ermöglicht werden, so ist also eine 2x18-Matrix erforderlich, wie sie in Fig. 3 dargestellt ist

Die einzelnen Bytes 17, 18 bzw. 19, 20 der Schnittstellenein- und -ausgänge sind jeweils von 0 bis 17 durchnumeriert. In der Matrix von Fig. 3 sind die Bytes 18 und 20 der Ausgänge 8 und 12 bis 14 mit ihrer jeweiligen Nummer in der rechten Spalte der Reihe nach von oben nach unten eingetragen. In der linken Spalte der Matrix ist zu jedem Ausgangsbyte des Teilnehmers das zugehörige Eingangsbyte eingetragen, welches mit diesem Ausgangsbyte verbunden werden soll. Das Einschreiben der Eingangsbytes in die Zeilen der Matrix von Fig. 3 erfolgt mittels eines Steuerbefehls über die Kontrolleinheit 15.

Sollen beispielsweise die Eingangsbytes Nr. 6 und 7 des Schnittstelleneingangs 9 mit den Ausgangsbytes Nr. 0 und 1 des Netzausgangs 8 verbunden werden, so wird in die erste Zeile der linken Spalte die Eingangsbytenummer 6 und in die zweite Zeile die Eingangsbytenummer 7 eingeschrieben. Stehen nun Daten in den Eingangsbytes Nr. 6 und 7 des Teilnehmereingangs 9 zur Übertragung an, so werden diese von der Kontrolleinheit 15 entsprechend der in der Matrix festgelegten Zuordnungsvorschrift den Ausgangsbytes Nr. 0 und 1 des Netzausgangs 8 zugeordnet, das heißt, die von dem vorliegenden Teilnehmer abgeschickten Daten werden in den ersten beiden Teil-Bitgruppen der Bitgruppe übertragen.

In der gleichen Weise werden alle anderen gewünschten Verbindungen aufgebaut und gegebenenfalls geändert. Sind also beispielsweise bei einer späteren Übertragung die ersten beiden Teil-Bitgruppen bereits belegt, so wird eine andere Zuordnungsvorschrift in die Matrix eingeschrieben, welche die Eingangsbytes Nr. und 7 beispielsweise mit den Ausgangsbytes Nr. und 3, also der dritten und vierten Teil-Bitgruppe der Bitgruppe verbindet und somit einen Datenkanal bildet.

Durch diese Art der Zuordnung ist also eine beliebige Wahl der für eine Übertragung verwendeten Teil-Bitgruppen aus den möglichen Teil-Bitgruppen möglich. In gleicher Weise können über die Zuordnungsvorschrift aber auch über den Netzdateneingang 7 ankommende Daten umgesetzt werden, beispielsweise können Daten, die auf der ersten Teil-Bitgruppe empfangen werden, auf die zweite, dritte oder sonst einer vorhanden Teil-Bitgruppe weitergeschickt werden. Auch die Daten von den Dateneingängen 9, 10 und 11 können umgesetzt werden, und zwar sowohl für eine Ausgabe auf die Teil-Bitgruppen als auch auf die Datenausgänge 12, 13 oder 14. Des weiteren ist es möglich, Daten von den Eingangsbytes 17, 19 beliebig zusammenzumischen und gemeinsam auszugeben.

All diese Möglichkeiten der byteweisen Zuordnung, Mischung, Umgruppierung usw. können auch bitweise vorgenommen werden, wenn die Zuordnungsvorschrift in der Matrix entsprechend bitweise eingeschrieben ist. Die Teilnehmereingänge 7, 9, 10, und 11 könnten also ebensogut bitweise den Teilnehmerausgängen 8, 12, 13, und 14 zugeordnet werden. Ebenso ist die Anzahl der Eingangsbytes 17, 19 und Ausgangsbytes 18, 20 hier nur beispielhaft angegeben, es kann also sowohl bei dem Netzein- und ausgang 7 bzw. 8 als auch bei den teilnehmerinternen Ein- und Ausgängen 9 bis 11 bzw. 12 bis 14 jeweils eine andere Anzahl von Bytes vorhanden sein, die einarider zuzuordnen sind.

Diese flexible bit- oder byteweise Zuordnung der Eingänge und Ausgänge eines Teilnehmers erlaubt damit insbesondere eine optimale Ausnutzung von vorhandenen Übertragungskapazitäten, da alle zur Übertragung zur Verfügung stehenden Teil-Bitgruppen, welche den Datenkanälen zugeordnet sind, benutzt werden können und dies in beliebiger Reihenfolge erfolgen kann.

## Patentansprüche

1. Verfahren zur Übertragung von digitalen Daten über Datenleitungen zwischen Datenquellen und -senken bildenden Teilnehmern (1, 2, 3, 4), die in einem mehrere Teilnehmer miteinander verbindenden Netzwerk angeordnet sind, in welchem die Daten in einem Format übertragen werden, welches eine getaktete Folge von einzelnen in Teil-Bitgruppen unterteilten Bitgruppen gleicher Länge vorschreibt, welche jeweils temporär bestimmten Teilnehmern im Netzwerk für eine Datenübertragung in Form eines Datenkanals zuweisbar sind,
**dadurch gekennzeichnet**, dass von jedem Teilnehmer (1, 2, 3, 4) aus die Belegung der Teil-Bitgruppen und damit der oder die Datenkanäle in Datenflussrichtung frei wählbar ist und dass eine Zuordnung der Teil-Bitgruppen für die zur Datenübertragung verwendeten Datenkanäle von jedem Teilnehmer (1, 2, 3, 4) über eine Zuordnungsvorschrift erfolgt, die mittels eines Steuerbefehls im Rahmen der Datenübertragung festlegbar ist.

2. Verfahren nach Anspruch 1,
**dadurch gekennzeichnet**, dass mehrere Teil-Bitgruppen einem einzigen Datenkanal zugeordnet werden.

3. Verfahren nach Anspruch 1 oder 2,
**dadurch gekennzeichnet**, dass jeder Teilnehmer (1, 2, 3, 4) im Netzwerk eine Kontrolleinheit (15) mit einer über einen Steuerbefehl festlegbaren Zuordnungsvorschrift aufweist, über welche jede Teil-Bitgruppe jedem Datenkanal des Netzwerks zugeordnet werden kann.

4. Verfahren nach einem der Ansprüche 1, 2 oder 3,
**dadurch gekennzeichnet**, dass die Zuordnungsvorschrift in einem Schreib-Lese-Speicher (16) eines jeden Teilnehmers (1, 2, 3, 4) in Form einer Matrix speicherbar ist.

5. Verfahren nach einem der Ansprüche 1 bis 4,
**dadurch gekennzeichnet**, dass die Teilnehmer (1, 2, 3, 4) im Netzwerk neben einem Netzeingang (7) und einem Netzausgang (8) mehrere Dateneingänge und/oder Datenausgänge aufweisen und dass jede Teil-Bitgruppe einem bestimmten Dateneingang eines Teilnehmers und jeder Datenausgang dieses Teilnehmers einer bestimmten Teil-Bitgruppe über die jeweilige Zuordnungsvorschrift zugeordnet werden kann.

6. Verfahren nach einem der Ansprüche 1 bis 5,
**dadurch gekennzeichnet**, dass die Dateneingänge und/oder Datenausgänge der Teilnehmer (1, 2, 3, 4) im Netzwerk zur Verarbeitung eines vorgegebenen, die Abfolge einzelner Bits oder einzelner Teil-Bitgruppen definierenden Datenformats geeignet sind und dass einzelne Bits oder Teil-Bitgruppen der im Netzwerk übertragenen Bitgruppen über die Zuordnungsvorschriften einzelnen Bits oder Teil-Bitgruppen der Eingänge und/oder Ausgänge der Teilnehmer (1, 2, 3, 4) zugeordnet werden können.

7. Verfahren nach einem der vorhergehenden Ansprüche,
**dadurch gekennzeichnet**, dass die im Netzwerk in Bitgruppen übertragenen Daten über die Zuordnungsvorschrift eines Teilnehmers bit- oder teilbitgruppenweise umgruppiert werden können.

8. Verfahren nach einem der vorhergehenden Ansprüche,
**dadurch gekennzeichnet**, dass die Teil-Bitgruppen gleiche Länge aufweisen und zusammenhängend ausgebildet sind.

9. Verfahren nach einem der vorhergehenden Ansprüche,
**dadurch gekennzeichnet**, dass das Netzwerk eine Ringstruktur aufweist.

## Claims

1. Method of transmitting digital data along data lines between users (1, 2, 3, 4), which users are formed by data sources and data sinks and are arranged in a network which connects a plurality of users together and on which the data is transmitted in a format which prescribes a timed sequence of individual bit-groups of equal length which are divided into part bit-groups and which can each time be temporarily alloted in the form of a data channel to specific users on the network for a data transmission,
**characterised in that** the allocation of the part bit-groups and hence the data channel or channels in the direction of data flow can be freely selected from each user (1, 2, 3, 4) and in that an assignment of the part bit-groups for the data channels used for data transmission is performed by each user (1, 2, 3, 4) by means of an assignment law which can be specified as part of the data transmission by means of a control command.

2. Method according to claim 1,
**characterised in that** a plurality of part bit-groups are assigned to a single data channel.

3. Method according to claim 1 or 2,
**characterised in that** each user (1, 2, 3, 4) on the network has a control unit (15) having an assignment law which can be specified by a control command and by means of which any part bit-group can be assigned to any data channel of the network.

4. Method according to any of claims 1, 2 and 3,
**characterised in that** the assignment law can be stored in the form of a matrix in a read/write memory (16) belonging to each user (1, 2, 3, 4).

5. Method according to any of claims 1 to 4,
**characterised in that** as well as a network input (7) and a network output (8) the users (1, 2, 3, 4) on the network also have a plurality of data inputs and/or data outputs, and in that, by means of the assignment law applicable at the time, each part bit-group can be assigned to a particular data input of a user and each data output of the user in question can be assigned to a particular part bit-group.

6. Method according to any of claims 1 to 5,
**characterised in that** the data inputs and/or data outputs of the users (1, 2, 3, 4) on the network are suitable for processing a preset data format which defines the sequence of individual bits or individual part bit-groups and in that individual bits or part bit-groups of the bit groups transmitted on the network can be assigned, by means of the assignment law, to individual bits or part bit-groups belonging to the inputs and/or outputs of the users (1, 2, 3, 4).

7. Method according to any of the foregoing claims,
**characterised in that** the data which is transmitted on the network in bit-groups can be regrouped bit by bit or part bit-group by part bit-group by means of the assignment law.

8. Method according to any of the foregoing claims,
**characterised in that** the part bit-groups are of equal length and are formed to be continuous.

9. Method according to any of the foregoing claims,
**characterised in that** the network has a ring structure.

## Revendications

1. Procédé de transmission de données numériques par des lignes de données reliant les participants (1, 2, 3, 4) formant des sources et des puits de données, associés dans un réseau reliant plusieurs participants, et dans lequel les données sont transmises suivant un format prescrivant une succession cadencée des différents groupes de bits subdivisés en groupes partiels de bits, de même longueur, qui peuvent être chaque fois attribués à des participants définis de manière temporaire dans le réseau pour une transmission de données sous la forme d'un canal de données,
caractérisé en ce que
chaque participant (1, 2, 3, 4) peut sélectionner librement l'occupation des groupes partiels de bits et ainsi du ou des canaux de données dans la direction de flux de données, et chaque participant (1, 2, 3, 4) attribue des groupes partiels de bits pour les canaux de données utilisés pour la transmission de données, par une prescription d'attribution qui peut être fixée à l'aide d'un ordre de commande dans le cadre de la transmission des données.

2. Procédé selon la revendication 1,
caractérisé en ce que
plusieurs groupes partiels de bits sont attribués à un unique canal de données.

3. Procédé selon la revendication 1 ou 2,
caractérisé en ce que
chaque participant (1, 2, 3, 4) du réseau comporte une unité de commande (15) avec une prescription d'attribution fixée par un ordre de commande, et qui permet d'attribuer chaque groupe partiel de bits à chaque canal de données du réseau.

4. Procédé selon l'une quelconque des revendications 1, 2, ou 3,
caractérisé en ce que
la prescription d'attribution peut être enregistrée sous la forme d'une matrice dans une mémoire écriture/lecture (16) de chaque participant (1, 2, 3, 4).

5. Procédé selon l'une quelconque des revendications 1 à 4,
caractérisé en ce que
les participants (1, 2, 3, 4) du réseau comportent en plus d'une entrée (7) et d'une sortie (8) de réseau, plusieurs entrées de données et/ou sorties de données, et par la prescription d'attribution respective, chaque groupe partiel de bits peut être associé à une certaine entrée de données d'un participant et chaque sortie de données d'un participant peut être attribuée à un certain groupe partiel de bits.

6. Procédé selon l'une quelconque des revendications 1 à 5,
caractérisé en ce que
les entrées et/ou les sorties de données des participants (1, 2, 3, 4) du réseau conviennent pour le traitement d'un format de données prédéterminé, définissant la succession de différents bits ou groupes partiels de bits, et les différents bits ou groupes partiels de bits des groupes de bits transmis dans le réseau sont attribués par les prescriptions d'attribution des différents bits ou groupes partiels de bits aux entrées et/ou sorties des participants (1, 2, 3, 4).

7. Procédé selon l'une des revendications précédentes,
caractérisé en ce que
les données transmises dans le réseau sous forme de groupes de bits sont regroupées par la prescription d'attribution d'un participant en groupes de bits ou de groupes partiels de bits.

8. Procédé selon l'une des revendications précédentes,
caractérisé en ce que
les groupes partiels de bits ont la même longueur et sont reliés.

9. Procédé selon l'une des revendications précédentes,
caractérisé en ce que
le réseau a une structure en anneau.
